(19) **Europäisches Patentamt**

**European Patent Office**

**Office européen des brevets**

(11) **EP 1 635 334 A2**

(12) **EUROPEAN PATENT APPLICATION**

(43) Date of publication:
**15.03.2006 Bulletin 2006/11**

(51) Int Cl.:
*G11B 5/706* (2006.01)     *G11B 5/68* (2006.01)
*G11B 5/702* (2006.01)     *H01F 1/047* (2006.01)
*H01F 1/06* (2006.01)

(21) Application number: **05019428.1**

(22) Date of filing: **07.09.2005**

(84) Designated Contracting States:
**AT BE BG CH CY CZ DE DK EE ES FI FR GB GR
HU IE IS IT LI LT LU LV MC NL PL PT RO SE SI
SK TR**
Designated Extension States:
**AL BA HR MK YU**

(30) Priority: **08.09.2004 JP 2004261594**

(71) Applicant: **FUJI PHOTO FILM CO., LTD.
Minami-Ashigara-shi, Kanagawa (JP)**

(72) Inventor: **Hattori, Yasushi,
c/o Fuji Photo Film Co., Ltd.
Odawara-shi,
Kanagawa (JP)**

(74) Representative: **HOFFMANN EITLE
Patent- und Rechtsanwälte
Arabellastrasse 4
81925 München (DE)**

(54) **Magnetic recording medium and manufacturing method thereof**

(57)     A magnetic recording medium in which a magnetic layer is formed on a support, wherein the magnetic layer contains a CuAu-type consisting of FeNi, FePd, FePt, CoPt or CoAu or $Cu_3Au$-type consising of $Ni_3Fe$, $FePd_3$, $FePt_3$, $CoPt_3$, $Ni_3Pt$, $CrPt_3$, $Ni_3Mn$ or $Co_3Pt$ ferromagnetic ordered alloy, and a value ($Mr \cdot t_{ave}$ ($G \cdot \mu m$)) obtained by multiplying the residual magnetic flux density ($Mr$ ($G$)) with an average thickness ($t_{ave}$ ($\mu m$)) of the magnetic layer is 30 or more, and a method of manufacturing the magnetic recording medium, wherein a coating and drying treatment of coating a coating solution for forming a magnetic layer containing a CuAu-type or $Cu_3Au$-type ferromagnetic ordered alloy and a binder on a support and of applying a drying treatment is conducted at least twice.

EP 1 635 334 A2

**Description**

BACKGROUND OF THE INVENTION

FIELD OF THE INVENTION

The present invention relates to a magnetic recording medium having a magnetic layer containing a CuAu-type or $Cu_3Au$-type ferromagnetic ordered alloy, and a manufacturing method thereof.

DESCRIPTION OF THE RELATED ART

Reduction of the particle size of a magnetic body is necessary for increasing the magnetic recording density thereof. For example, in magnetic recording media in general use such as video tapes, computer tapes, and disks, noise is reduced as the particle size is made smaller in cases where the weight of the ferromagnetic body is identical. A CuAu-type or $Cu_3Au$-type ferromagnetic ordered alloy shows large crystal magnetic anisotropy due to strains generated when ordering the structure. Accordingly, this is a promising material for the improvement of the magnetic recording density since it exhibits ferromagnetism even when the particle size is decreased (see, for example, Japanese application Laid-Open (JP-A) No. 2003-73705, the disclosure of which is incorporated by reference herein).

On the other hand, when the solid concentration in a coating solution is increased in a state where the particle size is small, it tends to cause agglomeration. Accordingly, when coating is conducted in a state where the solid concentration is high, the resulting surface is rough and thus a suitable magnetic recording medium cannot be obtained. Further, when a binder or a like is added to prevent agglomeration, magnetization is decreased, which is not desirable for the magnetic recording medium. As a result, only media with a thin coating thickness could be formed. When the thickness of the magnetic layer is small, the magnetic energy of the magnetic recording medium (residual magnetization x thickness) is decreased and, as a result, the output is lowered.

SUMMARY OF THE INVENTION

A first aspect of the present invention is to provide a magnetic recording medium in which a magnetic layer is formed on a support wherein the magnetic layer contains a CuAu-type or $Cu_3Au$-type ferromagnetic ordered alloy, and a value ($Mr \cdot t_{ave}$ ($G \cdot \mu m$)) obtained by multiplying the residual magnetic flux density (Mr (G)) with an average thickness of the magnetic layer ($t_{ave}$ ($\mu m$)) is 30 or more.

A second aspect of the invention is to provide a method of manufacturing a magnetic recording medium in which a magnetic layer is formed on a support, wherein the magnetic layer contains a CuAu-type or $Cu_3Au$-type ferromagnetic ordered alloy, and a value ($Mr \cdot t_{ave}$ ($G \cdot \mu m$)) obtained by multiplying the residual magnetic flux density (Mr (G)) with an average thickness of the magnetic layer ($t_{ave}$ ($\mu m$)) is 30 or more, and wherein the method comprises conducting a coating and drying treatment of coating a coating solution for forming a magnetic layer containing a CuAu-type or $Cu_3Au$-type ferromagnetic ordered alloy on a support and then applying a drying treatment at least for twice.

DETAILED DESCRIPTION OF THE INVENTION

The forgoing subject can be solved by the present invention as described below.

That is, the present invention provides a magnetic recording medium in which a magnetic layer is formed on a support wherein the magnetic layer contains a CuAu-type or $Cu_3Au$-type ferromagnetic ordered alloy, and a value ($Mr \cdot t_{ave}$ ($G \cdot \mu m$)) obtained by multiplying the residual magnetic flux density (Mr (G)) with an average thickness of the magnetic layer ($t_{ave}$ ($\mu m$)) is 30 or more.

The expression "CuAu-type ferromagnetic ordered alloy" and "$Cu_3Au$-type ferromagnetic ordered alloy" are used in the manner known to those skilled in the art and as described in, for example, Mookerjee, Electronic Structure of Alloys, Surfaces, and Clusters, Advances in Condensed Matter Science, Vol. 4, Chapter 8, J, App. Phys., 93(1) 453-457 (2003), Jap. J. of Applied Phys. Letters, 39, part 2, No. 11B 1121-1123 (2000), and Phys. Rev. Letts., Vol. 78, No 2, pp. 270-273 (1997), the disclosures of which are incorporated by reference herein.

The magnetic layer preferably comprises two or more layers and the magnetic layer preferably contains a binder. The thickness (t) of the magnetic layer is preferably from 40 to 100 nm and the standard deviation ($\sigma$) for the average thickness ($t_{ave}$) of the magnetic layer is preferably $0.03 \mu m$ or less.

Further, the invention provides a method of manufacturing a magnetic recording medium which comprises conducting a coating and drying process of coating a coating solution for forming a magnetic layer containing a CuAu-type or $Cu_3Au$-type ferromagnetic ordered alloy on a support and of applying drying treatment at least for twice.

In the coating solution, a binder is contained preferably. The temperature for the drying treatment is preferably at 100 °C or higher.

The invention can provide a magnetic recording medium capable of providing high output and a manufacturing method thereof.

A magnetic recording medium and a manufacturing method thereof are to be described specifically.

[Magnetic Recording Medium]

In the magnetic recording medium of the invention, a CuAu-type or $Cu_3Au$-type ferromagnetic ordered alloy (herein after sometimes referred to as "ferromagnetic ordered alloy") is formed on a support. The magnetic recording medium includes magnetic tapes such as video tapes and computer tapes, magnetic disks such as floppy (registered trademark) disks, hard disks, etc. By incorporation of the ferromagnetic ordered alloy in the magnetic layer, ferromagnetic property (high coercive force) can be provided. In this invention, while the ferromagnetic ordered alloys include various forms, a magnetic particle comprising a ferromagnetic ordered alloy is preferred.

Further, the value ($Mr \cdot t_{ave}$) obtained by multiplying the residual magnetic flux density (Mr) with an average thickness ($t_{ave}$) of the magnetic layer is 30 ($G \cdot \mu m$) or more. When "$Mr \cdot t_{ave}$" is less than 30 ($G \cdot \mu m$), the output is lowered. Further, when the value is excessively large, since a MR head may be saturated and has no substantial function, "$Mr \cdot t_{ave}$" is, preferably, from 30 to 150 ($G \cdot \mu m$) and, more preferably, from 30 to 80 ($G \cdot \mu m$).

In a case of increasing "$Mr \cdot t_{ave}$" to 30 ($G \cdot \mu m$) or more, it is preferred that the magnetic layer comprises two or more multi-layered structure. In a case where the magnetic layer is formed of a single layer, since the thickness is small, the magnetic energy of the magnetic recording medium (residual magnetization $\times$ thickness) is decreased. As a result, the output is lowered. Further, it may be sometimes difficult to form a thick magnetic layer by the coating for once. In view of the problem, high output can be generated while eliminating unevenness in the thickness by making the magnetic layer as a two or more layered structure. With a practical point of view such as cost or productivity, it is more preferred that the magnetic layer comprises 2 to 6 layers. For making the magnetic layer to the two or more layered structure, it is preferred to adopt a method of conducting a coating and drying treatment of coating a coating solution for forming the magnetic layer on the support and of applying a drying treatment at least for twice.

The residual magnetic flux density (Mr) of "$Mr \cdot t_{ave}$" can be determined by measuring using a VSM (Vibrating Sample Magnetometer).

The magnetic layer in the magnetic recording medium according to the invention is preferably incorporated with a binder. By the incorporation of the binder, the temperature of heat treatment or forming the magnetic layer can be lowered. As a result, a magnetic recording medium with no agglomeration of magnetic particles can be formed. Further, examples and the content of the binder will be described specifically in the method of manufacturing the magnetic recording medium to be described later.

The thickness (t) of the magnetic layer is, preferably, from 40 to 100 nm and, more preferably, from 40 to 80 nm. When the thickness is less than the range described above, the output may sometimes be lowered. Further, when the recording wave length is shorter, since recording is conducted only for the surface layer even when the thickness of the magnetic layer is increased, increase of the thickness beyond the range has no substantial meaning.

In the invention, the standard deviation σ for the average thickness ($t_{ave}$) of the magnetic layer is, preferably, 0.03 $\mu m$ or less and, more preferably, from 0.005 to 0.02 $\mu m$. By decreasing the standard deviation σ to 0.03 $\mu m$ or less, noises can be reduced. The standard deviation σ may be decreased to 0.03 $\mu m$ or less by adopting a method of conduct the coating and drying treatment at least for twice and using an appropriate known method together.

The fluctuation value for the thickness of the magnetic layer ($\sigma/t_{ave}$) obtained by dividing the standard deviation σ with the average thickness $t_{ave}$ of the magnetic layer is, preferably 0.5 or less, more preferably, 0.3 or less and, further preferably, 0.2 or less. The noises can be decreased by decreasing the fluctuation value for the thickness of the magnetic layer ($\sigma/t_{ave}$) to 0.5 or less.

The "average thickness $t_{ave}$" for the magnetic layer and "standard deviation σ" for the average thickness $t_{ave}$ of the magnetic layer mean those values obtained by the following method in a case of a multi-layered structure. Also in the case of the magnetic single layered structure, they mean values measured in accordance therewith.

That is, a magnetic recording medium is at first cut out to a thickness of about 0.1 $\mu m$ by FIB for the longitudinal directions and observed by a transmission type electron micro scope at a factor of $10,000\times$ to $100,000\times$, preferably, from $50,000\times$ to $100,000\times$, which is then photographed.

The print size for the photograph is preferably from A4 to A5 size. Then, when the magnetic layer and the lower layer are formed, the boundary was profiled black under visual judgment while taking notice on the difference of shape for the ferromagnetic metal powder and the non-ferromagnetic inorganic powder of the lower layer, and the surface of the magnetic layer is also profiled black in the same manner.

Then, the length of the profiled line was measured by an image processing apparatus IBAS 2 manufactured Zeiss Co. For example, when the length of a photographed specimen, for example, printed and enlarged to A4 size is 21 cm, measurement is conducted for 85 to 300 cycles. Using the average value for the measured values as $t_{ave}$, the standard deviation σ is determined from the following equation:

$$\sigma = [\{(t1 - t_{ave})^2 + (t2 - t_{ave})^2 + \cdots + (tn - t_{ave})^2\} / (n-1)]^{1/2}$$

In the formula, [t1, t2, ... tn] shows each of measured values for the layer thickness. n is from 85 to 300. It is preferred that the maximum value of each of the measured values for the thickness of the magnetic layer is within a range of about 1.0 to 3 times of $t_{ave}$. Further, it is preferred that the minimum value for the same measured value is within a range of about 0.4 to 1 times of $t_{ave}$.

Unless otherwise specified, the thickness (t) for the magnetic layer means the total thickness for each of the magnetic layers, and the average thickness ($t_{ave}$) for the magnetic layer means an average value for the total thickness for each of magnetic layers.

In the magnetic recording medium of the invention, it is preferred that the center line average roughness (Ra) on the surface is from 0.1 to 5 nm at a cut off value of 0.25 mm. In a case where it is less than 0.1 nm, a friction coefficient between the head and the magnetic recording medium increases to cause adhesion. Further, in a case where it exceeds 5 nm, spacing loss increases to sometimes lower the output. Since it is preferred for the magnetic recording medium for high density recording that it has a surface having excellent smoothness, Ra is, more preferably, within a range from 0.1 to 4 nm.

Particularly, in a case of using the magnetic recording medium of the invention as a recording medium for a hard disk, Ra is, preferably, from 0.1 to 1 nm and, more preferably, from 0.3 to 0.8 nm. In a case where it exceeds 1 nm, the flying head no more flies and the head sometimes is crushed on the medium surface. In a case where it is less than 0.1 nm, when the rotation of a medium stops in a state where the head is in contact with the medium surface by some or other troubles, the head is sometimes adhered to the surface of the medium and moves no more.

Further, in a case of using the magnetic recording medium of the invention for a flexible medium such as a floppy (registered trademark) disk or a tape, since a recording system running in a state while the head is in contact with the medium is adopted, when the medium surface is excessively smooth, the friction coefficient increases and the head is sometimes adhered to the medium. In view of the above, Ra is, preferably, 1 to 5 nm and, more preferably, 2 to 3 nm. In a case where Ra is excessively large, an effective distance between the head and the medium is increased and sometimes no satisfactory electromagnetic conversion characteristic can be obtained.

As a method of smoothing the surface of the magnetic layer, it is effective to incorporate a matrix agent as a binder in a magnetic layer. Further, it is preferred to apply a calendering treatment after forming the magnetic layer. Further, for removing fine protrusions or dusts, a burnishing treatment may also be applied.

In a case of using the magnetic recording medium of the invention as a hard disk and applying a burnishing treatment to the medium by a head burnishing, it is preferred that the surface before the treatment is somewhat smooth. If it is not smooth, the burnish head can not fly but crushes to the surface of the medium.

After the burnishing treatment, presence or absence of surface protrusions can be examined by a glide head having a strain gage to the head. The flying height of the head is higher in the order of the burnishing head, the glide head and the electromagnetic conversion characteristic head. The flying height of the burnishing head is, preferably, from 5 to 15 nm and, more preferably, 10 to 12 nm. Usually, the flying height of the glide head is about 12 nm. Further, the load upon burnishing treatment is, preferably, from 3 to 12 g and, more preferably, 3 to 6 g.

The surface protrusions of the magnetic recording medium can be evaluated by using a glide head. When protrusions are present on the surface of the magnetic layer, the electromagnetic conversion characteristic head and the protrusions abut against each other to scrape the protrusions. As a result, scraping dusts are deposited to the head and fill the head gap, and the electromagnetic conversion characteristics can no more be evaluated. Accordingly, it is preferred that the protrusions are not present, and the surface protrusions can be removed upon evaluation by the glide head. Accordingly, the number of surface protrusions at 12 nm or more is, preferably, 5 or less and, more preferably, 3 or less and ideally, 0. This is because glide head is contaminated more to increase the number of times for cleaning the glide head or increase the number of exchange times as the number of protrusions increases, which is not preferred with an industrial point of view.

The magnetic recording medium of the invention may also have other layers optionally in addition to the magnetic layer. For example, in a case of a disk, it is preferred that a magnetic layer or a non-magnetic layer is further provided to the surface opposite to the magnetic layer. In a case of a tape, it is preferred that a backing layer is disposed on a support on the side opposite to the surface where the magnetic layer is formed.

Further, by forming an extremely thin protective film on the magnetic layer, the wear resistance can be improved and, further, by coating a lubricant on the protective film to increase the slidability, a magnetic recording medium of a sufficient reliability can be obtained.

The material for the protective film includes oxides such as silica, alumina, titania, zirconia, cobalt oxide and nickel oxide; nitrides such as titanium nitride, silicon nitride, and boron nitride; carbides such as silicon carbide, chromium carbide, and boron carbide; carbon such as graphite and amorphous carbon. Particularly preferred are hard amorphous carbon generally referred to as diamond-like carbon.

Since the carbon protective film comprising carbon has a sufficient wear resistance with an extremely thin film thickness and causes less scorching to a sliding member, it is suitable as the material for the protective film.

As a method of forming the carbon protective film, a sputtering method is generally used in the hard disk and various methods of using plasma CVD at high film deposition rate have been proposed for products requiring continuous film deposition such as video tapes. Accordingly, it is preferred to adopt such methods described above.

Among all, it has been reported that a plasma injection CVD (PI-CVD) method has an extremely high film deposition speed and a protective film of high quality which is hard with less pin holes can be obtained for the carbon protective film (for example, in JP-A Nos. 61-130487, 63-279426, and 3-113824).

The carbon protective film has a Vicker's hardness, preferably, of 1,000 kg/mm$^2$ or more and, more preferably, 2,000 kg/mm$^2$ or more. Further, it is preferred that the crystal structure is an amorphous structure and is non-electroconductive.

Then, in a case of using a diamond-like carbon film as a carbon protective film, the structure can be confirmed by Raman spectroscopy. That is, in a case of measuring the diamond-like carbon film, it can be confirmed by the detection of a peak at 1,520 to 1,560 cm$^{-1}$. As the structure of the carbon film is deviated from the diamond-like structure, the peak detected by Raman spectroscopy is deviated from the range described above, and also the hardness as the protective layer is lowered.

As the carbon material for forming the carbon protective film, carbon-containing compounds including alkanes such as methane, ethane, propane or butane; alkenes such as ethylene or propylene; alkynes such as acetylene; are used preferably. Further, a carrier gas such as argon, or an additive gas such as hydrogen or nitrogen for improving the film quality can be added optionally.

When the thickness of the carbon protective film is large, it results in worsening of the electromagnetic conversion characteristics or lowering of close adhesion to the magnetic layer, whereas the wear resistance is insufficient when the film thickness is small. Accordingly, the film thickness is, preferably, from 2.5 to 20 nm and, more preferably, 5 to 10 nm.

Further, for improving the close adhesion between the protective film and the magnetic layer as a substrate, it is preferred that the surface of the magnetic layer is previously etched by an inert gas or exposed to a reactive gas plasma such as oxygen to modify the surface.

In the magnetic recording medium of the invention, a known no-magnetic underlayer or an intermediate layer may be formed below the magnetic layer. In order to improve the running durability and the corrosion resistance, it is preferred to provide a lubricant or an anti-rusting agent on the magnetic layer or the protective layer. As the lubricant to be added known, hydrocarbon lubricant, fluoro lubricant or extreme pressure additive can be used.

The hydrocarbon lubricant can include, for example, carboxylic acids such as stearic acid and oleic acid; esters such as butyl stearate; sulfonate such as octadecyl sulfonate; phosphate such as monooctadecyl phosphate; alcohols such as stearyl alcohol and oleyl alcohol; carboxylic acid amides such as stearic acid amid; and amines such as stearyl amine.

The fluoro lubricants include those lubricants in which alkyl groups of the hydrocarbon lubricant are substituted partially or entirely with fluoro alkyl groups or perfluoro polyether groups.

The perfluoro polyether group includes perfluoro methylene oxide polymer, perfluoro ethylene oxide polymer, perfluoro-n-propylene oxide polymer $(CF_2CF_2CF_2O)_n$, perfluoro-isopropylene oxide polymer $(CF_3CF(CF_3)O)_n$ or copolymers thereof.

Further, those compounds having polar functional groups such as hydroxyl group, ester group, or a carboxyl group at the terminal end of the alkyl group or in the molecule of the hydrocarbon lubricant have a high effect of reducing the frictional force and are suitable.

Further, the molecular weight is from 500 to 5,000 and, preferably, from 1,000 to 3,000.

In a case where it is less than 500, sometimes volatility is high and lubricity is low. Further, in a case where it exceeds 5,000, since the viscosity increases, the slider and the disk tend to be adsorbed to each other sometimes tending to cause stopping of running, head crushing or the like.

The perfluoro polyether is commercially available, specifically, under the trade name of FOMBLIN manufactured by Audimond Co. or KRYTOX manufactured by Dupon Co.

The extreme pressure additives include, for example, phosphate esters such as trilauryl phosphate, phosphite esters such as trilauryl phosphite, thiophosphite esters such as trilauryl trithiophosphite, thiophosphate, and sulfur type extreme pressure agents such as dibenzyl disulfide.

The lubricants are used each alone or in a combination of plural of them. As a method of applying the lubricant to the magnetic layer or to the protective film, the lubricant may be dissolved in an organic solvent and coated, for example, by a wire bar method, a gravure method, a spin coating method, or dip coating method, or may be deposited by means of a vacuum vapor deposition process.

The anti-rusting agent includes, for example, nitrogen-containing heterocyclic rings such as benzotriazole, benzimidazole, purine, and pyrimidine, and derivatives in which alkyl side chains, etc. are introduced to the mother nuclei thereof; nitrogen and sulfur containing heterocyclic rings such as benzothiazole, 2-mercapton benzothiazole, tetrazaindene ring compound, and thiouracyl compounds, and derivatives thereof.

As described above, in a case where the magnetic recording medium is a magnetic tape or the like, a back coat layer (backing layer) may be provided to the surface of the support on the side not formed with the magnetic layer. The back coat layer is a layer provided to the surface of the support on the side not formed with the magnetic layer by coating a back coat layer forming paint in which granular ingredient such as an abrasive or an antistatic agent, and a binder are dispersed in a known organic solvent.

As the granular ingredient, various kinds of inorganic pigments or carbon black can be used and, as the binder, resins such as nitrocellulose, phenoxy resin, vinyl chloride resin, and polyurethane can be used each alone or in admixture thereof.

Further, a known adhesive layer may also be provided to the coating surface of the alloy particle containing solution, and the surface on the side formed with the back coat layer.

[Method of Manufacturing Magnetic Recording Medium]

The method of manufacturing the magnetic recording medium according to the invention is a method of manufacturing a magnetic recording medium by forming a magnetic layer on a support by conducting a coating and drying treatment of coating a coating solution for forming a magnetic layer on the support and of applying a drying treatment for at least for twice.

Specifically, alloy particles containing a CuAu-type or $Cu_3Au$-type ferromagnetic ordered alloy are at first prepared (alloy particle preparing step). An alloy particle containing solution containing alloy particles is as a coating solution to a support and a drying treatment is applied (coating and drying treatment). After the coating and drying treatment, the coating and drying treatment is applied again to form a multi-layered structure (coating and drying step), and an annealing treatment is applied at a predetermined temperature (annealing step) to render the alloy particles into magnetic particles, thereby forming magnetic layer comprising two or more layers on the support. Then, a protective layer, a lubricant layer, etc. are formed as required to manufacture a magnetic recording medium of the invention. Each of the steps is to be described more specifically.

[Alloy Particle Preparing Step]

Alloy particles to be formed into magnetic particles by the annealing treatment can be prepared by a gas phase method or liquid phase method. The liquid phase method is preferred in view of excellent mass productivity. As the liquid phase method, various methods known so far can be applied and it is preferred to apply a reducing method with further improvement and, among the reducing methods, a reverse micelle method capable of easy control for the particle size is particularly preferred.

[Reverse Micelle Method]

The reverse micelle method comprises at least (1) a reducing step of mixing two kinds of reverse micelle solutions and conducting reducing reaction and, (2) an aging step of aging at a predetermined temperature after the reducing reaction.

Each of the steps is to be described below.

(1) Reducing step:

At first, a reverse micelle solution (I) formed by mixing a no water-soluble organic solvent containing a surfactant and an aqueous solution of a reducing agent is prepared.

As the surfactant, an oil-soluble surfactant is used. It includes, specifically, sulfonate salt type (for example, aerosol OT (manufactured by Wako Junyaku)), a quaternary ammonium salt type (for example, cetyltrimethyl ammonium bromide), and ether type (for example, pentaethylene glycol dodecyl ether).

The amount of the surfactant in the no water-soluble organic solvent is preferably from 20 to 200 g/l.

Preferred no water-soluble organic solvent dissolving the surfactant include alkanes, ethers and alcohols.

The alkane is preferably alkanes of 7 to 12 carbon atoms. Specifically, heptane, octane, isooptane, nonane, decane, undecane, dodecane, etc. are preferred.

As ethers, diethyl ether, dipropyl ether, dibutyl ether, etc. are preferred.

As the alcohols, ethoxy ethanol, ethoxy propanol, etc are preferred.

As the reducing agent in the aqueous solution of the reducing agent, it is preferred that alcohols; polyalcohols; compounds including $H_2$; HCHO, $S_2O_6^{2-}$, $H_2PO_2^-$, $BH_4^-$, $N_2H_5^+$, $H_2PO_3^-$, etc. are used each alone or by two or more of them in combination.

The amount of the reducing agent in the aqueous solution is preferably from 3 to 50 mol based on 1 mol of the metal salt.

In this case, the mass ratio between water and surfactant (water/surfactant) in the solution of the reverse micelle solution (I) is preferably 20 or less. In a case where the mass ratio exceeds 20, this may sometimes result in a problem that precipitation tends to occur and particles tend to become not uniform. The mass ratio is, preferably, 15 or less and, more preferably, 0.5 to 10.

Separately, a reverse micelle solution (II) formed by mixing a no water-soluble organic solvent containing a surfactant and an aqueous solution of a metal salt is prepared.

The condition for the surfactant and the no water-soluble organic solvent (material to be used, concentration, etc.) are identical with those in a case of the reverse micelle solution (I).

Further, those identical with or different from the reverse micelle solution (I) can be used. Further, also the mass ratio between the water and the surfactant in the solution of the reverse micelle solution (II) is identical with that in the case of the reverse micelle solution (I), which may be identical with or different from the mass ratio in the reverse micelle solution (I).

The metal salt contained in the aqueous solution of the metal salt is preferably selected properly such that magnetic particles to be prepared can form a CuAu-type or $Cu_3Au$-type ferromagnetic ordered alloy.

The CuAu-type ferromagnetic ordered alloy includes, for example, FeNi, FePd, FePt, CoPt, and CoAu and, among them, FePd, FePt, and CoPt are particularly preferred.

The $Cu_3Au$-type ferromagnetic ordered alloy includes, for example, $Ni_3Fe$, $FePd_3$, $Fe_3Pt$, $FePt_3$, $CoPt_3$, $Ni_3Pt$, $CrPt_3$, $Ni_3Mn$, $Co_3Pt$ and, among them, $FePd_3$, $FePt_3$, $CoPt_3$, $Fe_3Pd$, $Fe_3Pt$, and $Co_3Pt$ are particularly preferred.

Specific examples of the metal salt include, for example, $H_2PtCl_6$, $K_2PtCl_4$, $Pt(CH_3COCHCOCH_3)_2$, $Na_2PdCl_4$, $Pd(OCOCH_3)_2$, $PdCl_2$, $Pd(CH_3COCHCOCH_3)_2$, $HAuCl_4$, $Fe_2(SO_4)_3$, $Fe(NO_3)_3$, $(NH_4)_3Fe(C_2O_4)_3$, $Fe(CH_3COCHCOCH_3)_3$, $NiSO_4$, $CoCl_2$, and $Co(OCOCH_3)_2$.

The concentration in the aqueous solution of the metal salt (as metal salt concentration) is, preferably, from 0.1 to 1,000 $\mu$mol/ml and, more preferably, from 1 to 100 $\mu$mol/ml.

By properly selecting the metal salt described above, alloy particles capable of forming the CuAu-type or $Cu_3Au$-type ferromagnetic ordered alloy in which a base metal and a noble metal form an alloy are prepared.

It is necessary that the alloy phase is transformed from the disordered phase to the ordered phase in the alloy particles by an annealing treatment to be described later, and it is preferred to add a third element such as Sb, Pb, Bi, Cu, Ag, Zn, and In to the binary alloy for lowering the transformation temperature. For the third element, it is preferred to previously add a precursor for each of the third elements to the metal salt solution. The addition amount is, preferably, from 1 to 30 at% and, more preferably, 5 to 20 at% based on the binary alloy.

The reverse micelle solutions (I) and (II) prepared as described above are mixed. The mixing method is not restricted particularly but it is preferred to mix by adding the reverse micelle solution (II) while stirring the reverse micelle solution (I) considering the uniformless of the reduction. After the completion of mixing, the reducing reaction is preceded in which the temperature is preferably kept at a constant temperature in a range from -5 to 30 °C.

When the reducing temperature is lower than -5 °C, it results in a problem that the aqueous phase causes coagulation to make the reducing reaction not homogenous. When it exceeds 30 °C, agglomeration or precipitation tends to occur to sometimes make the system instable. A reducing temperature is, from 0 to 25 °C, and, more preferably from 5 to 25 °C.

The "constant temperature" means that the setting temperature assumed as T (°C) is in a range of T ± 3 °C. Also in such a case, it is defined that the upper limit and the lower limit for T are within the range of the reducing temperature (-5 to 30 °C).

It is necessary that the time for the reducing reaction is properly set depending on the amount of the reverse micelle solution, etc. and it is, preferably, from 1 to 30 min and, more preferably, from 5 to 20 min.

Since the reducing reaction gives a significant effect on the mono-dispersibility of the grain size distribution, it is preferred that the reaction is conducted while stirring at a speed as high as possible.

A preferred stirring device is a stirring device having high shearing force, specifically, a stirring device having a stirring blade basically of a turbine type or paddle type structure and, further, having a structure in which a sharp blade is attached at the end of the blade or at a position in contact with the blade, and in which the blade is rotated by a motor. Specifically, those apparatus such as a dissolver (manufactured by Tokushu Kika Kogyo), Omni mixer (manufactured by Yamato Scientific Institute), homogenizer (manufactured by SMT) etc. are useful. Mono-dispersed alloy particles can be synthesized as a stable liquid dispersion by using the apparatus described above.

It is preferred to add at least one dispersant having 1 to 3 amino groups or carboxyl groups by from 0.001 to 10 mol based on one mol of alloy particles to be prepared to at least one of the reverse micelle solutions (I) and (II).

By the addition of the dispersant described above, it is possible to obtain alloy particles of high mono-dispersibility and with less agglomeration.

In a case where the addition amount is less than 0.001, the mono dispersibility of the alloy particles is sometimes less improved and, in a case where it exceeds 10 mol, agglomeration may sometimes occur.

The dispersant is preferably an organic compound having a group adsorbed to the surface of alloy particles. Specifically, it includes those having 1 to 3 amino groups, carboxylic groups, sulfonic acid groups, or sulfinic acid group which can be used alone or in combination.

They include compounds having the structural formula represented by: $R-NH_2$, $NH_2-R-NH_2$, $NH_2-R(NH_2)-NH_2$, $R-COOH$, $COOH-R-COOH$, $COOH-R(COOH)-COOH$, $R-SO_3H$, $SO_3H-R-SO_3H$, $SO_3H-R(SO_3H)-SO_3H$, $R-SO_2H$, $SO_2H-R-SO_2H$, $SO_2H-R(SO_2H)-SO_2H$, in which R represents a linear, branched or cyclic saturated or unsaturated hydrocarbon.

Particularly preferred compound as the dispersant is oleic acid, the oleic acid is a well-known surfactant for the stabilization of colloid, and has been used for protecting metal particles such as of iron. The relatively long chain of oleic acid (for example, oleic acid has 18 carbon chains with a length of 20 Å or less (2 nm or less). Oleic acid is not an aliphatic group and has one double bond) gives an important steric hindrance for offsetting strong magnetic interaction between particles.

Similar long chained carboxylic acid such as erucic acid or linolic acid is also used like oleic acid (for example, long chained organic acids having 8 to 22 carbon atoms can be used each alone or in combination). Since oleic acid is an easily available inexpensive natural resource (such as olive oil), it is preferred. Further, oleyl amine derived from oleic acid is also a useful dispersant like oleic acid.

It is considered that in the reducing step described above, a metal having a base oxidation/reduction potential such as Co, Fe, Ni, or Cr (metal at about -0.2V (vs. N. H. E)) or lower) in the CuAu-type or $Cu_3Au$-type ferromagnetic ordered alloy phase is reduced and precipitated at a micro size in a mono-dispersed state. Subsequently, in the temperature elevation stage and in the aging step to be described later, a metal having a noble oxidation/reduction potential such as Pt, Pd, or Rh (metal at about -0.2V (vs. N. H. E)) or more is reduced and substituted by a base metal and precipitated around the precipitated base metal as nuclei and at the surface thereof. It is considered that the ionized noble metal is again reduced by the reducing agent and precipitated. By such repetition, alloy particles capable of forming the CuAu-type or $Cu_3Au$-type ferromagnetic ordered alloy can be obtained.

(2) Aging step:

After the completion of the reducing reaction, the solution after the reaction was heated to an aging temperature.

The aging temperature is preferably at a constant temperature of 30 to 90 °C and the temperature is set higher than the temperature for the reducing reaction. The aging time is preferably from 5 to 180 min. In a case where the aging temperature and the time are deviated from the range described above toward the region of higher temperature and the longer time, agglomeration or precipitation tend to occur. On the other hand, in a case where they are deviated towards the region of lower temperature and shorter time, the reaction is not completed to sometimes change the composition. Preferred aging temperature and time are 40 to 80 °C and 10 to 150 min and, more preferred aging temperature and time are 40 to 70 °C and 20 to 120 min.

The "constant temperature" is identical with the case of the temperature for the reducing reaction (the "reducing temperature" should be read as "aging temperature") and, particularly, preferably, the temperature is higher by 5 °C or more and more preferably, higher by 10 °C or more than the temperature of the reducing reaction, within the range for the aging temperature (30 to 90 °C). When it is not higher by more than 5 °C, a composition as per the formulation can not sometimes be obtained.

In the aging step described above, a noble metal is precipitated on a base metal precipitated by reduction in the reduction step.

That is, since reduction of the noble metal occurs only on the base metal and the base metal and the noble metal are not precipitated separately, it is possible to prepare alloy particles capable of efficiently forming the CuAu-type or $Cu_3Au$-type ferromagnetic ordered alloy, at high yield as per the formulated compositional ratio and they can be controlled to a desired composition. Further, by properly controlling the stirring speed at the temperature upon aging, the grain size of the obtained alloy particles can be made to a desired size.

After conducting the aging, it is preferred to provide a cleaning dispersing step of cleaning the solution after the aging with a mixed solution of water and a primary alcohol, then applying a precipitating treatment by a primary alcohol to form precipitate and dispersing the precipitates with an organic solvent.

By the provision of the cleaning · dispersing step, impurities are removed and the coating-ability upon forming the magnetic layer of the magnetic recording medium by coating can be improved further.

The cleaning and the dispersion are conducted respectively at least for once and, preferably, twice or more respectively.

The primary alcohol used for cleaning is not particularly limited and methanol, ethanol, etc. is preferred. The volumic mixing ratio (water/primary alcohol) is, preferably, within a range from 10/1 to 2/1 and, more preferably, within a range from 5/1 to 3/1.

When the water ratio is higher, it is sometimes difficult to remove the surfactant and, on the other hand, when the ratio of the primary alcohol is higher, this tends to sometimes cause agglomeration.

As described above, alloy particles dispersed in a solution (alloy particle containing solution) are obtained.

Since the alloy particles are mono-dispersed, they are not agglomerated when coated to the support but can maintain a uniformly dispersed state. Accordingly, since the respective alloy particles are not agglomerated even when applying the annealing treatment, they can be made ferromagnetic efficiently and the coating adoptability is excellent.

The grain size of the alloy particles before an oxidizing treatment to be described later is preferably smaller with a view point of decreasing noises but in a case where it is excessively small, they become super-paramagnetic after annealing and are not sometimes appropriate to magnetic recording. Generally, it is, preferably, from 1 to 100 nm, more preferably, 1 to 20 nm, further preferably, 3 to 10 m.

(Reducing Method)

Various methods may be used for preparing magnetic particles capable of forming the CuAu-type or $Cu_3Au$-type ferromagnetic ordered alloy by the reducing method and it is preferred to apply a method of reducing a metal having a base oxidation/reduction potential (hereinafter referred to sometimes as "base metal") and a metal having a noble oxidation/reduction potential (hereinafter referred to sometimes as "noble metal") in an organic solvent or water, or in a mixed solution of an organic solvent and water by using a reducing agent or the like.

The order of reducing the base metal and the noble metal is not particularly limited but they may be reduced simultaneously.

As the organic solvent, an alcohol, a polyalcohol, etc. can be used, and the alcohol includes methanol, ethanol, butanol, etc., and the polyalcohol includes ethylene glycol, glycerin etc.

Examples of the CuAu-type or $Cu_3Au$-type ferromagnetic ordered alloy are identical with those for the reverse micelle method described previously.

Further, as the method of preparing alloy particles by previously precipitating the noble metal, the method described, for example, in Japanese Patent Application No. 2001-269255, in column Nos. 18 to 30 can be applied.

As the metal having the noble oxidation/reduction potential, Pt, Pd, Rh, etc. can be used preferably, and $H_2PtCl_6 \cdot 6H_2O$, $Pt(CH_3COCHCOCH_3)_2$, $RhCl_3 \cdot 3H_2O$, $Pd(OCOCH_3)_2$, $PdCl_2$, $Pd(CH_3COCHCOCH_3)_2$, etc. can be used being dissolve in a solvent. The concentration of the metal in the solution is, preferably, from 0.1 to 1,000 $\mu$mol/ml and, more preferably, from 1.0 to 100 $\mu$mol/ml.

Further, as the metal having the base oxidation/reduction potential, Co, Fe, Ni, and Cr can be used preferably and Fe, Co are particularly preferred. The metal described above can be used by dissolving $FeSO_4 \cdot 7H_2O$, $NiSO_4 \cdot 7H_2O$, $CoCl_2 \cdot 6H_2o$, $Co(OCOCH_3) \cdot 4H_2O$, etc. into a solvent. The concentration of the metal in the solution is, preferably, from 0.1 to 1,000 $\mu$mol/ml and, more preferably, from 0.1 to 100 $\mu$mol/ml.

Further, it is preferred to add the third element to the binary alloy thereby lowering the transformation temperature to the ferromagnetic ordered alloy in the same manner as in the reverse micelle method described previously. The addition amount is identical with that in the reverse micelle method.

For example, in a case of reducing and precipitating the base metal and the noble metal in this order by using the reducing agent, it is preferred to adopt a procedure of reducing a base metal, or a base metal and a portion of a noble metal by using a reducing agent having a reduction potential more basic than -0.2 V (vs. N. H. E), adding the same to a noble metal source and reducing the same by using a reducing agent having a oxidation/reduction potential more noble than -0.2 V (vs. N. H. E), and then reducing by using a reducing agent having a reduction potential more basic than -0.2 V (vs. N. H. E).

The oxidation/reduction potential depends on pH of the system, and alcohols such as 1, 2-hexadecanediol, glycerin, $H_2$, and HCHO, are used preferably for the reducing agent having the oxidation/reduction potential more noble than -0.2 V (vs. N. H. E).

$S_2O_6^{-2}$, $H_2PO_2^-$, $BH_4^-$, $N_2H_5^+$, $H_2PO_3^-$, etc. can be used preferably for the reducing agent having the potential more basic than -0.2 V (vs. N. H. E).

In a case of using a metal compound at 0 valence such as Fe carbonyl as the raw material for the base metal the reducing agent for the base metal is not particularly necessary.

Upon precipitation of the noble metal under reduction, alloy particles can be prepared stably by the presence of an adsorbent. As the adsorbent, a polymer or a surfactant is preferably used.

The polymer includes polyvinyl alcohol (PVA), poly-N-vinyl-2-pyrrolidone (PVP), gelatin, etc. Among them, PVP is particularly preferred.

Further, the molecular weight is, preferably, from 20,000 to 60,000 and, more preferably, from 30,000 to 50,000. The amount of the polymer is, preferably, from 0.1 to 10 times and, more preferably, form 0.1 to 5 times the mass of the alloy particles to be formed.

Surfactant used preferably as the adsorbent preferably contains "organic stabilizer" as a long chained organic compound represented by the general formula R-X. R in the general formula is "tail group" which is a linear or branched hydrocarbon or fluorocarbon chain and usually contains 8 to 22 carbon atoms. Further, X in the general formula is a "head group" which is a portion (X) for providing a specific chemical bond to the surface of the alloy particles and, preferably, one of sulfinate (-SOOH), sulfonate (-SO$_2$OH), phosphinate (-POOH), phosphonate (-OPO(OH)$_2$), carboxylate, and thiol.

The organic stabilizer is preferably one of sulfonic acid (R-SO$_2$OH), sulfinic acid (R-SOOH), phosphinic acid (R$_2$POOH), phosphonic acid (R-OPO(OH)$_2$), carboxylic acid (R-COOH), thiol (R-SH). Among those, particularly preferred is oleic acid as in the reverse micelle method.

Combination of the phosphine and the organic stabilizer (triorgano phosphine/acid, etc.) can provide excellent controllability to the growth and stabilization of particles. While didecyl ether and didodecyl ether can also be used, phenyl ether or n-octyl ether is used preferably as the solvent because of the reduced cost and high boiling point thereof.

The reaction is preferably conducted, depending on the necessary alloy particles and the boiling point of the solvent, at a temperature within a range from 80 °C to 360 °C, more preferably, from 80 °C to 240 °C. In a case where the temperature is lower than the temperature range, particles do not sometimes grow. In a case where the temperature is higher than the range, the particles may sometimes grow uncontrollably to increase formation of undesired by-products.

The grain size of the alloy particles is, preferably, from 1 to 100 nm, more preferably, from 3 to 20 nm and, further preferably, from 3 to 10 nm like in the reverse micelle method.

As the method of increasing the grain size, a seed crystal method is effective. In a case of use as the magnetic recording medium, it is preferred to arrange the alloy particles in a closed packed structure in order to increase the recording capacity and, for this purpose, the standard deviation for the size of the alloy particles is, preferably, less than 10 % and, more preferably, 5 % or less.

In a case where the particle size is excessively small, the particles become superparamagnetic which is not preferred. Then, in order to increase the particle size, it is preferred to adopt the seed crystal method as described above. In this case, metals more noble than the grain constituent metal may sometimes be precipitated. Since oxidation of the particles is worried, it is preferred to previously apply a hydrogenation treatment to the particles.

The outermost layer of the alloy particles is preferably made of a noble metal with a view point of preventing oxidation to the outermost layer but it tends to be agglomerated. Then, an alloy of a noble metal and a base metal is preferred in the invention. Such a constitution can be attained easily and efficiently by the liquid phase method as described above.

Removal of salts from the solution after the synthesis of the alloy particles is preferred in view of the improvement for the dispersion stability of the alloy particles. While desalting includes a method of adding an excess alcohol to cause slight agglomeration thereby causing spontaneous precipitation or centrifugal settling thereby removing the salts together with supernatants, since agglomeration tends to be caused in such a method, use of a ultra filtration method is preferred.

As described above, alloy particles dispersed in a solution (alloy particle-containing solution) is obtained.

For the evaluation of the particle size of the alloy particles, a transmission type electron microscope (TEM) can be used. While the crystal system of the alloy particles or magnetic particles can be determined also by electron diffraction by TEM, use of X-ray diffraction is preferred in view of higher accuracy. For the compositional analysis inside the alloy particles or magnetic particles, it is preferred to conduct evaluation by attaching EDAX to FE-TEM capable of finely restricting electron beams. Further, magnetic properties of the alloy particles or magnetic particles can be evaluated by using VSM.

[Oxidation Treatment Step]

By applying an oxidation treatment to the thus prepared alloy particles, magnetic particles having ferromagnetic property can be produced at a high efficiency without increasing the temperature upon applying the annealing treatment. This is considered to be attributable to the phenomenon as well be described below.

That is, by at first oxidizing the alloy particles, oxygen intrudes on the crystal lattice thereof. When an annealing treatment is applied in a state where oxygen intrudes, oxygen is dissociated by heat from the crystal lattice. Since defects are caused by the dissociation of oxygen and movement of the metal atoms constituting the alloy is facilitated through the defects, it is considered that phase transformation tends to occur even at a relatively low temperature.

Such a phenomenon is inferred, for example, by measurement of alloy particles after the oxidizing treatment and magnetic particles applied with the annealing treatment by EXAFS (extended X-ray absorption fine structure).

For example, in the alloy particles not applied with the oxidizing treatment for Fe-Pt alloy particles, existence of bond between Fe atom and Pt atom or Fe atom.

On the contrary, in the alloy particles applied with the oxidizing treatment, presence of bond between Fe atom and oxygen atom can be confirmed. However, bond between the Pt and the Fe atom is scarcely observed. This means that bond between Fe-Pt and Fe-Fe is disconnected by the oxygen atom. This is considered that the Pt atom or Fe atom tends to move easily during annealing.

Then, after applying the annealing treatment to the alloy particles, presence of oxygen can not be confirmed and presence of the bond with the Pt atom or Fe atom around the Fe atom is confirmed.

Taking the phenomenon described above into consideration, it can be found that the phase transformation less proceeds without oxidation and it is necessary to elevate the temperature for the annealing treatment. However, it is also considered that excess oxidation makes the interaction excessively strong between a metal such as Fe that is sensible to oxidation and oxygen to form metal oxides.

Accordingly, it is important to control the oxidized state of the alloy particles and, for this purpose, it is necessary to set the optimal condition for the oxidization.

For the oxidizing treatment, in a case where alloy particles are prepared by the liquid phase method described above, a gas at least containing oxygen may be supplied to the liquid containing alloy particles after preparation.

The oxygen partial pressure in this case is, preferably, from 10 to 100 % and, more preferably, from 15 to 50 % based on the entire pressure.

Further, the temperature for the oxidizing treatment is, preferably, from 0 to 100 °C and, more preferably, from 15 to 80 °C.

The oxidized sate of the alloy particles is preferably evaluated, for example, by EXAFS and the number of bonds between a base metal such as Fe and oxygen is, preferably, from 0.5 to 4 and, more preferably, 1 to 3 with a view point of disconnecting the Fe-Fe bond or Pt-Fe bond by oxygen.

[Coating and drying step]

An alloy particle containing solution (alloy particle-containing solution after application of the oxidizing treatment) is coated on a support. In this case, a binder is preferably incorporated to the alloy particle-containing solution.

In a case of forming a coating layer only using the low molecular dispersion aid such as an oleic acid or oleyl amine, the alloy particles, etc. are re-dispersed by the solvent of the coating solution for coating the next layer and multiple coating can not be applied.

Further, for multiple coating in a system using only the low molecular dispersion aid, it is necessary to apply coating after carbonizing oleic acid or oleyl amine at high temperature. In such a case, a temperature at a certain level or higher is necessary with a view point of carbonization for the heating temperature and, specifically, it is, preferably, from 250 °C to 400 °C and, more preferably, from 300 °C to 350 °C.

As the binder, while various materials can be used, use of a matrix agent is preferred. Use of the matrix agent is preferred means since the matrix agent forms a film at a low temperature. In this case, the heating temperature (drying temperature) for forming the film is preferably 100 °C or higher. With the same reason, 400 °C or lower is preferred for the higher temperature region. It is more preferably from 150 °C to 250 °C.

The heating atmosphere may be either oxidizing or reducing atmosphere. The oxidizing atmosphere is preferred with a view point of lowering the transformation temperature to the CuAu-type or $Cu_3Au$-type ferromagnetic ordered alloy by the introduction of oxygen defects. In this case, method of heating in air is simple and convenient and excellent in the industrial adaptability.

By using a layer containing magnetic particles in the metal oxide matrix as a magnetic layer, it is possible to improve the scratch resistance of the magnetic layer and increase adhesion with the support. That is, even when an annealing treatment is applied for ordering the alloy particles, since the metal oxide matrix serves as a binder, it is possible to keep intense adhesion with the support. Further, since the constitution of the metal oxide matrix does not change but a firm magnetic layer is formed even by applying the annealing treatment, deterioration of the film strength by the carbonization of the organic dispersant or the polymer can be suppressed to improve the scratch resistance.

Further, since magnetic particles contained in the metal oxide matrix do not agglomerate to each other and can be kept at a highly dispersed state, the ferromagnetism of the magnetic particles can be provided efficiently.

The metal oxide matrix preferably comprises at least one matrix agent selected from silica, titania and polysiloxane and, specifically, it preferably comprises at least one matrix agent selected from organo silica sol (for example, silica sol manufactured by Nissan chemical Co., Nanotech $SiO_2$ manufactured by C.I. Kasei Co.), organo titania sol (for example, Nanotech $TiO_2$ manufactured by C.I. Kasei), and silicone resin (for example, Toray FIL R910 manufactured by Toray Co.).

The materials described above are particularly effective for the improvement of the scratch resistance and the adhesion of the magnetic layer.

The addition amount of the matrix agent to the entire volume of the magnetic particles is, preferably, 1 to 50 % by volume and, more preferably, 2 to 30 % by volume, further preferably, 3 to 20 % by volume and, particularly, 5 to 20 % by volume. Since the smoothing effect for the surface is insufficient when the addition amount of the matrix agent is smaller, whereas the degree of fillage of the magnetic body (magnetic particles) is lowered failing to obtain satisfactory electromagnetic conversion characteristics in a case where the addition amount is excessively large. The binder including the matrix agent is preferably used by being dissolved in an appropriate solvent (for example, alkanes such as decane) and added to the alloy particle-containing solution.

For coating the alloy particle containing solution, a method of coating by a known method such as spin coating or dip coating is applicable for coating the alloy particle-containing solution. The coating amount for once is, preferably, from 1 to 100 ml/mm$^2$ and, more preferably, 2 to 10 ml/mm$^2$.

An alloy particle containing solution is coated again on the coating film after drying and then drying is conducted. Coating film as magnetic layers are formed in plurality by applying such a coating and drying treatment for a desired number of times.

[Annealing treatment step]

The alloy particles in the coating film are in disordered phase. As described above, ferromagnetic property can not be obtained in the disordered phase. Then, it is necessary to apply a heat treatment (annealing) in order to attain an ordered phase. It is necessary that the heat treatment is conducted by using differential thermal analysis (DTA) to determine a transformation temperature at which the alloy constituting alloy particles exhibits ordered-to-disordered transformation and conduct the treatment at a temperature higher than the transformation temperature.

The transformation temperature is usually about 500°C but the transformation temperature can be lowered by conducting oxidization before the annealing treatment and conducting the annealing treatment in a reducing atmosphere. Further, the transformation temperature may sometimes be lowered by the addition of a third element. Accordingly, the annealing treatment temperature is, preferably, 150 °C or higher, more preferably, 150 to 500 °C and, further preferably, 300 to 450 °C.

Further, when the annealing treatment is applied in the state of particles, particles tend to move and fuse to each other. Accordingly, while high coercive force can be obtained it tends to cause defects of increasing the particle size. However, since the annealing treatment is conducted in a state where they are coated, for example, on the support with a view point of preventing agglomeration of alloy particles, it can be said that the phenomenon described above less occurs.

The support may be inorganic or organic material so long as it is a support usable for the magnetic recording medium.

As the inorganic support, Al, Mg alloy such as Al-Mg or Mg-Al-Zn, glass, quartz, carbon, silicon, ceramics, etc. are used. Such supports are excellent in impact resistance and have rigidity suitable to the reduction of thickness or high speed rotation. Further, it has a feature resistant to heat compared with organic supports.

As the organic support, polyesters such as polyethylene terephthalate and polyethylene naphthalate; polyolefins; cellulose triacetate, polycarbonate, polyamide (including aliphatic polyamide and aromatic polyamide such as aramid), polyimide, polyamide imide, polysulfone, polybenzooxazole;, etc. can be used.

For coating the alloy particles on the support, various additives are added optionally to the particle alloy containing solution after applying the oxidizing treatment, which are coated on the support.

It is preferred that the content of the alloy particles is set to a desired concentration (0.01 to 0.1 mg/ml).

As the method of coating to the support, air doctor coating, blade coating, rod coating, extrusion coating, air knife coating, squeeze coating, dip coating, reverse coating, transfer roll coating, gravure coating, kiss coating, cast coating, spray coating, spin coating, etc. can be utilized.

For the atmosphere upon applying the annealing treatment, it is preferred to conduct under a no-oxidizing atmosphere such as $H_2$, $N_2$, Ar, He, Ne, etc. for proceeding the phase transformation efficiently and preventing oxidization of the alloy. Particularly, a reducing atmosphere of methane, ethane, $H_2$ or the like is preferred with a view point of dissociating oxygen present on the lattices by the oxidizing treatment. Further, with a view point of keeping the grain size, annealing treatment in the magnetic field under the reducing atmosphere is preferred. In a case of using an $H_2$ atmosphere, mixing of an inert gas is preferred with a view point of preventing explosion.

Further, for preventing fusion of particles during annealing, it is preferred to conduct the annealing treatment once in an inert gas under a temperature lower than the transformation temperature thereby carbonizing the dispersant and then conduct the annealing treatment at a temperature higher than the transformation temperature in the reducing atmosphere. In this case, it is most preferred to coat a Si series resin or the like on a layer comprising alloy particles after the annealing treatment at a temperature lower than the transformation temperature optionally and then conduct an annealing treatment at a temperature higher than the transformation temperature.

By the application of the annealing treatment described above, the alloy particles conduct phase transformation from the disordered phase to the ordered phase, that is, to conduct transformation to ferromagnetic magnetic particles.

For the magnetic particles manufactured by the manufacturing method according to the invention as described above, it is preferred that the coercive force thereof is, preferably, from 95.5 to 398 kA/m (1,200 to 5,000 Oe) and it is, more preferably, from 95.5 to 278.6 kA/m (1,200 to 3,500 Oe), considering that the recording head can cope therewith in a case of applying to a magnetic recording medium.

The grain size of the magnetic particle is, preferably, from 1 to 100 nm, more preferably, from 3 to 20 nm and, further preferably, 3 to 10 nm.

The magnetic recording medium according to the invention is manufactured by optionally forming the lubricant layer and the protective layer as described previously. The magnetic recording medium can be used by being properly punched using a puncher or being cut into a desired size by using a cutter or the like.

[Example]

The present invention is to be described more specifically by way of examples but the invention is not restricted to them.

[Example 1]

[Preparation of FePt alloy particles]

The following procedures were conducted in a high purity $N_2$ gas.

A reverse micelle solution (I) was prepared by admixing an alkane solution formed by mixing 10.8 g of aerosol OT (manufactured by Wako Junyaku), 80 ml of decane (manufactured by Wako Junyaku) and 2 ml of oleyl amine (manufactured by Tokyo Kasei Kogyo Co.) to an aqueous solution of a reducing agent formed by dissolving 0.76 g of $NaBH_4$ (manufactured by Wako Junyaku) into 16 ml of water (deoxygenized: 0.1 mg/l or less).

A reverse micelle solution (II) was prepared by admixing an alkane solution formed by mixing 5.4 g of aerosol OT and 40 ml of decane to an aqueous solution of a metal salt formed by dissolving 0.46 g of iron triammonium trioxalate ($Fe(NH_4)_3(C_2O_4)_3$) (manufactured by Wako Junyaku) and 0.38 g of potassium chloro platinate ($K_2PtCl_4$) (manufactured by Wako Junyaku) in 12 ml of water (deoxygenized).

While stirring the reverse micelle solution (I) at 22 °C in an Omni mixer (manufactured by Yamato Scientific Co. Ltd.) at high speed, the reverse micelle solution (II) was instantaneously added. After 10 min while stirring by a magnetic stirrer, the temperature was elevated to 50 °C and they were aged for 60 min.

2 ml of oleic acid (manufactured by Wako Junyaku) was added and cooled to a room temperature. After cooling, it was taking out in atmospheric air. For destroying the reverse micelle, a mixed solution of 100 ml of water and 100 ml of methanol was added to separate the solution into an aqueous phase and an oil phase. A state in which the alloy particles were dispersed in the oil phase was obtained. The oil phase was washed five times with a mixed solution of 600 ml of water and 200 ml of methanol.

Then, 1,100 ml of methanol was added to cause flocculation in alloy particles and precipitating them. The supernatants were removed and 20 ml of heptane (manufactured by Wako Junyaku) was added and they were de-dispersed.

Further, settling dispersion comprising settling by the addition of 100 ml of methanol and dispersion by the addition of 20 ml of heptane was repeated twice and, finally, 5 ml of heptane was added to prepare an alloy particle-containing solution containing FePt alloy particles with the mass ratio for water and surfactant (water/surfactant) of 2.

When yield, composition, volume average grain size and distribution (fluctuation coefficient) were measured for the obtained alloy particles, the following results were obtained.

The composition and the yield were determined by ICP spectroscopy (inductively coupled high fluency plasma spectroscopy).

The volume average grain size and the distribution were determined by measuring particles photographed by TEM (transmission electron microscope: manufactured by Hitachi Ltd.: 300 kV) and by applying statistic processing.

As the alloy particles for measurement, alloy particles that were collected from the prepared alloy particle-containing solution, dried sufficiently, and heated in an electric furnaces were used.

Composition: FePt alloy with Pt 44.5 at%
Yield: 85 %
Average grain size: 4.2 nm
Frustration coefficient: 5 %

After applying vacuum degassing to the alloy particle-containing solution and removing the solvent, decane was added in a glow box under an $N_2$ atmosphere to obtain dispersion with 4 % by mass of alloy particles. A 1 % by mass solution (binder solution) of silicone resin (Toray R910, using the same solvent as the coating solution) was added by the addition amount described in the following Table 1 per 1 ml of the dispersion to prepare a coating solution.

In the coating, a glass support for hard disc (manufactured by Toyo Kohan Co.: 65/20-0.635t glass · polish · substrate) was rotated at 500 rpm by a spin coater, a coating solution was dropped on the glass and, 2 sec after, the number of rotation was increased to 8,000 rpm and drying was conducted. Then, it was heated in air at a drying temperature described in the following Table 1 for 25 min.

By repeating the coating-drying treatment described above, multiple coating was conducted. The number of coating steps is as shown in the following Table 1.

It was heated at a temperature elevation rate of 200 °C /min in an electric furnace (450 °C) under a mixed gas atmosphere of $H_2$ and Ar ($H_2$: Ar = 5:95) for 30 min, and applied with an annealing treatment by lowering the temperature to a room temperature at 50 °C/min, to form a magnetic layer.

[Formation of protective layer]

After the annealing treatment, a protective layer comprising carbon was formed on a magnetic layer by Rf sputtering at 400 W. The film thickness was 10 nm.

[Burnishing treatment]

The surface of the protective layer was applied with a burnishing treatment by using the following burnishing head while rotating at 7,200 rpm.

-Specification of burnishing head (Glide Signus Co.)-

Slider: 24 pads
Load: 5 g
Suspension: Type 2030
Z-height: 29 mil (0.7366 mm)

[Formation of lubricant layer]

The surface was cleaned with fluorinert FC72 (manufactured by Sumitomo 3M Co.) and then dried.

A solution of Fomblin Z sol (manufactured by Audimont Co.) formulated to 1 % by mass with a solvent (fluorinert FC 72) was prepared and coated while pulling up from the solution at 3 mm/min by a dip coater to form a lubricant layer on the protective layer, to manufacture a magnetic recording medium.

[Examples 2 to 4 and Comparative Examples 1, 2]

Magnetic recording media were manufactured in the same manner as in Example 1 except for changing the amount of resin, the number of coating steps, the drying temperature, etc. as shown in the following Table 1.

[Evaluation]

Respective magnetic recording media of Examples 1 to 4 and Comparative Examples 1 and 2 were cut out each from the end face by FIB (manufactured by Seiko Instrument Co: SMI2050), and observed under transmission electron microscope (manufactured by Hitachi Ltd.: H9000) under an acceleration voltage of 300 kV. As a result, the diameter of particles in the magnetic layer was 5 nm. Further, the thickness of the magnetic layer is described in the following Table 1.

For the magnetic characteristics (measurement for coercive force), the magnetic layer was measured on every magnetic recording medium. After applying a magnetic field at 40 kOe in a plane direction by a magnetizer comprising solenoid (manufactured by Toei industry Co: MPM-04), the characteristics were measured by using a high sensitivity magnetization vector measuring equipment manufactured by Toei industry Co. and DATA processor of the Toei under the condition at an application magnetic field of 790 kA/m (10 kOe).

The value (Mr·$t_{ave}$) obtained by multiplying the residual magnetic flux density (Mr) with the average thickness ($t_{ave}$) of the magnetic layer and the coercive force (Hc) are shown in the following Table 1. The electromagnetic conversion characteristics (output) were evaluated by using a spin-stand LS90 manufactured by Kyodo Denshi Co. The writing current was 40 mA. The number of rotation of the recording medium was 7,200 rpm. Other conditions are as shown below.

Write head - ring head gap width: 0.29$\mu$m
Read head - MR head gap width: 0.19$\mu$m
Number of rotation: 7,200 rpm
Diameter at measured position: 49 mm
Relative speed: 18.47 m/s
Recording current value: 35 mA
MR sense current: 6 mA

[Tale 1]

| | Resin (binder) amount (µl) | Coating times | Drying temperature (°C) | Average thickness of magnetic layer (nm) | Mr·t$_{ave}$ (G·µm) | Hc (kA/m) | Ra (nm) | Fluctuation of thickness (%) | Output (dB) |
|---|---|---|---|---|---|---|---|---|---|
| Example 1 | 95 | 5 | 200 | 100 | 105 | 260.7 (3300 Oe) | 1.2 | 14 | 12 |
| Example 2 | 95 | 4 | 200 | 80 | 84 | 244.9 (3100 Oe) | 1.1 | 12 | 9 |
| Example 3 | 95 | 2 | 200 | 38 | 38 | 205.4 (2600 Oe) | 1 | 15 | 0 |
| Example 4 | none | 2 | 300 | 40 | 40 | 221.2 (2800 Oe) | 2 | 28 | −1 |
| Comparative Example 1 | 95 | 1 | 200 | 14 | 14 | 118.5 (1500 Oe) | 0.9 | 12 | −14 |
| Comparative Example 2 | none | 1 | 300 | 16 | 16 | 126.4 (1600 Oe) | 1 | 35 | −13 |

EP 1 635 334 A2

From the result of Table 1, satisfactory electromagnetic conversion characteristics were obtained in the magnetic recording media of Examples 1 to 4 in which the magnetic layer was constituted as a multi-layered structure, with $Mr \cdot t_{ave}$ being 30 ($G \cdot \mu m$) or more.

**Claims**

1. A magnetic recording medium in which a magnetic layer is formed on a support, wherein the magnetic layer contains a CuAu-type or $Cu_3Au$-type ferromagnetic ordered alloy, and a value ($Mr \cdot t_{ave}$ ($G \cdot \mu m$)) obtained by multiplying the residual magnetic flux density (Mr (G)) with an average thickness ($t_{ave}$ ($\mu m$)) of the magnetic layer is 30 or more.

2. The magnetic recording medium according to claim 1, wherein the magnetic layer comprises two or more layers.

3. The magnetic recording medium according to claim 1, wherein the magnetic layer contains a binder.

4. The magnetic recording medium according to claim 3, wherein the binder comprises a metal oxide matrix.

5. The magnetic recording medium according to claim 3, wherein the binder is contained by 1 to 50% by volume based on the entire volume of magnetic particles.

6. The magnetic recording medium according to claim 1, wherein the ferromagnetic ordered alloy is in the form of magnetic particles.

7. The magnetic recording medium according to claim 1, wherein the CuAu-type ferromagnetic ordered alloy is selected from the group consisting of FeNi, FePd, FePt, CoPt, and CoAu.

8. The magnetic recording medium according to claim 1, wherein the $Cu_3Au$-type ferromagnetic ordered alloy is selected from the group consisting of $Ni_3Fe$, $FePd_3$, $FePt_3$, $CoPt_3$, $Ni_3Pt$, $CrPt_3$, $Ni_3Mn$, and $Co_3Pt$.

9. The magnetic recording medium according to claim 1, wherein the thickness (t) of the magnetic layer is from 40 to 100 nm.

10. The magnetic recording medium according to claim 1, wherein the standard deviation ($\sigma$) of the average thickness ($t_{ave}$) of the magnetic layer is 0.03 $\mu m$ or less.

11. The magnetic recording medium according to claim 1, wherein a center line average roughness (Ra) on a surface of the magnetic recording medium is from 0.1 to 5 nm.

12. The magnetic recording medium according to claim 1, wherein a protective film is present on the magnetic layer.

13. A method of manufacturing a magnetic recording medium in which a magnetic layer is formed on a support, wherein the magnetic layer contains a CuAu-type or $Cu_3Au$-type ferromagnetic ordered alloy and has a value ($Mr \cdot t_{ave}$ ($G \cdot \mu m$)) obtained by multiplying the residual magnetic flux density (Mr (G)) with an average thickness ($t_{ave}$ ($\mu m$)) of the magnetic layer is 30 or more, and wherein a coating and drying treatment of coating a coating solution for forming the magnetic layer containing the CuAu-type or $Cu_3Au$-type ferromagnetic ordered alloy on the support and of applying a drying treatment is conducted at least twice.

14. The method of manufacturing a magnetic recording medium according to claim 13, wherein an annealing treatment is applied after the coating and drying treatment.

15. The method of manufacturing a magnetic recording medium according to claim 14, wherein the temperature of the annealing treatment is 150°C or higher.

16. The method of manufacturing a magnetic recording medium according to claim 13, wherein a binder is incorporated in the coating solution.

17. The method of manufacturing a magnetic recording medium according to claim 13, wherein the temperature of the drying treatment is 100°C or higher.